# EUROPÄISCHE PATENTANMELDUNG

(11) **EP 3 396 360 A1**
(43) Veröffentlichungstag der Anmeldung: **31.10.2018**
(21) Anmeldenummer: 18162684.7
(22) Anmeldetag: 19.03.2018
(51) Int. Cl.: G01N 21/88, G01N 21/95, G01M 11/08

(54) **ANLAGE ZUR OPTISCHEN ÜBERPRÜFUNG VON OBERFLÄCHENBEREICHEN VON GEGENSTÄNDEN**

(30) Priorität: 25.04.2017 DE 102017108770
(71) Anmelder: Eisenmann SE, 71032 Böblingen (DE)
(72) Erfinder: Röckle, Jürgen, 71106 Magstadt (DE)
(74) Vertreter: Ostertag & Partner Patentanwälte mbB

(57) **Zusammenfassung**

Die Erfindung betrifft eine Anlage zur optischen Überprüfung von Oberflächenbereichen von Gegenständen (12), insbesondere von lackierten Fahrzeugkarosserien (114, 14), mit einer Prüflichtvorrichtung (134, 34) zum Bestrahlen eines sich in einem Prüfbereich (118) der Anlage befindlichen Gegenstandes mit einem Prüflicht und/oder zum Erzeugen eines Prüfmusters (35) auf dem Oberflächenbereich (16), wobei die Prüflichtvorrichtung (134, 34) ein Leuchtsystem (38) mit mehreren Leuchteinheiten (162, 62) zur Emission von Prüflicht in den Prüfbereich (118) aufweist, wobei die Leuchteinheiten (162, 62) eine transparente Abdeckung zum Prüfbereich (118) aufweisen.

Erfindungsgemäß ist eine Bedienvorrichtung (170, 70) vorgesehen, welche vom Prüfbereich (118) aus gesehen hinter der transparenten Abdeckung angeordnet ist und die dazu eingerichtet ist, dass durch Berühren zumindest eines Abschnitts der Abdeckung oder/und durch Annähern an einen solchen Abschnitt eine Betätigung der Bedienvorrichtung (170, 70) erfolgen kann.

## Beschreibung

### HINTERGRUND DER ERFINDUNG

### 1. Gebiet der Erfindung

Die Erfindung betrifft eine Anlage zur optischen Überprüfung von Oberflächenbereichen von Gegenständen, insbesondere von lackierten Fahrzeugkarosserien, mit
a) einer Prüflichtvorrichtung zum Bestrahlen eines sich in einem Prüfbereich der Anlage befindlichen Gegenstandes mit einem Prüflicht und zum Erzeugen eines Prüfmusters auf dem Oberflächenbereich, wobei
b) die Prüflichtvorrichtung ein Leuchtsystem mit mehreren Leuchteinheiten zur Emission vom Prüflicht in den Prüfbereich aufweist, wobei die Leuchteinheiten eine transparente Abdeckung zum Prüfbereich aufweisen.

### 2. Beschreibung des Standes der Technik

Des Weiteren betrifft die Erfindung ein Leuchtsystem für eine solche Anlage mit wenigstens einer ersten und einer zweiten Leuchteinrichtung sowie ein Prüflichtmodul zum Aufbau einer solchen Anlage.

### ZUSAMMENFASSUNG DER ERFINDUNG

In derartigen Anlagen werden insbesondere die Oberflächen von lackierten Fahrzeugkarosserien visuell von Prüfpersonen auf ihre Güte hin überprüft. Fehler in der Oberfläche führen zu lokalen Verzerrungen eines auf die Fahrzeugkarosserie projizierten Prüfmusters im Vergleich zu einer Projektion desselben Prüfmusters auf eine ideal fehlerfreie Oberfläche. Auf diese Weise wird eine geübte Prüfperson schnell auf vorhandene Oberflächenfehler aufmerksam und kann diese auf geeignete Weise kennzeichnen.

Es gibt eine Vielzahl verschiedener Oberflächenfehler, welche beim Lackiervorgang auftreten können. Solche Oberflächenfehler bei lackierten Oberflächen lassen sich unterschiedlichen Kategorien zuordnen. Lediglich beispielhaft und nicht abschließend kann es sich bei solchen Oberflächenfehlern um Lackeinschlüsse, Benetzungs- oder Verlaufstörungen, Krater, Wolken, Farbabweichungen und dergleichen handeln.

Bei der Begutachtung der Oberfläche der lackierten Fahrzeugkarosserie kann es notwendig sein, die Emission des Prüflichts für eine genauere Begutachtung zu verändern. Beispielsweise kann es notwendig sein, einzelne Leuchteinheiten ein- oder auszuschalten oder/und die gesamte Beleuchtungssituation innerhalb des Prüfbereichs anzupassen. Für diesen Zweck können beispielsweise Steuertableaus vorgesehen sein, um die einzelnen Leuchteinheiten des Prüfbereichs oder den gesamten Prüfbereich anzusteuern. Erfordert die genaue Begutachtung der Oberfläche allerdings eine stufenweise Anpassung der Beleuchtungssituation, kann dies für die Prüfperson einen laufintensiven Prozess bedeuten. Für jeden Steuerbefehl muss die Prüfperson zum nächstgelegenen Steuertableau laufen, den Steuerbefehl absetzen und die Begutachtung erneut vornehmen.

### BESCHREIBUNG BEVORZUGTER AUSFÜHRUNGSBEISPIELE

Es ist eine Aufgabe der Erfindung, eine Anlage der eingangs genannten Art anzugeben, bei welcher die Effektivität und Effizienz der Überprüfung gegenüber dem Stand der Technik verbessert sind.

Diese Aufgabe wird durch eine Anlage gemäß dem unabhängigen Anspruch 1 gelöst.

Die erfindungsgemäße Anlage zur optischen Überprüfung von Oberflächenbereichen von Gegenständen, insbesondere von lackierten Fahrzeugkarosserien, weist eine Prüflichtvorrichtung zum Bestrahlen eines sich in einem Prüfbereich der Anlage befindlichen Gegenstandes mit einem Prüflicht auf. Die Prüflichtvorrichtung dient außerdem zum Erzeugen eines Prüfmusters auf dem Oberflächenbereich. Die Prüflichtvorrichtung weist ein Leuchtsystem mit mehreren Leuchteinheiten zur Emission von Prüflicht in den Prüfbereich auf. Die Leuchteinheiten sind mit einer transparenten Abdeckung zum Prüfbereich hin ausgestattet.

Erfindungsgemäß ist vorgesehen, dass eine Bedienvorrichtung vorgesehen ist, welche von dem Prüfbereich aus gesehen hinter der transparenten Abdeckung einer Leuchteinheit angeordnet ist. Die Bedienvorrichtung ist dazu eingerichtet, dass durch Berühren zumindest eines Abschnitts der Abdeckung beispielsweise durch eine Prüfperson oder/und durch Annähern an einen solchen Abschnitt beispielsweise durch eine Prüfperson eine Betätigung der Bedienvorrichtung erfolgen kann.

Auf diese Art und Weise ist es möglich, dass eine Prüfperson direkt an der Stelle, an der sie den Oberflächenbereich des zu untersuchenden Gegenstandes prüft, durch eine einfache Handbewegung in Richtung der Abdeckung einer Leuchteinheit die Bedienvorrichtung betätigen kann und so beispielsweise die für die Prüfung vorgesehene Lichtsituation beeinflussen kann. Es entfällt der Gang zu einem nächstliegenden Steuertableau. Gleichzeitig bietet die Anbringung der Bedienvorrichtung innerhalb der transparenten Abdeckung den Vorteil, dass keine Kanten innerhalb des Prüfbereichs durch das Anbringen der Bedienvorrichtung entstehen. Dies ermöglicht eine leicht zu reinigende Oberfläche, da sich an Kanten potentiell leicht Staub oder andere Verunreinigungen ansammeln können. Fehler bei der Reinigung solcher Kanten führen zu Verschleppungen der Verunreinigungen und damit unter Umständen zu einer Kontamination des Beschichtungsvorgangs. Die innere Oberfläche des Prüfbereichs ist somit leicht zu reinigen und die Bedienvorrichtung leicht zu betätigen.

Als weiteren Vorteil kann die so ausgestaltete Bedienvorrichtung ohne mechanischen Taster ausgeführt werden. Der damit verbundene mechanische Verschleiß entfällt.

Bei einer vorteilhaften Ausführungsform ist vorgesehen, dass die Bedienvorrichtung einen kapazitiven Sensor umfasst.

Dies hat den Vorteil, dass viele gebräuchliche elektrische isolierende Materialien wie insbesondere Glas von dem elektrischen Feld des kapazitiven Sensors durchdrungen werden können, so dass der kapazitive Sensor auf der Rückseite, d.h. der dem Prüfbereich abgewandten Seite, der Abdeckung angebracht werden kann. Auf diese Weise ist die dem Prüfbereich zugewandte Seite der Abdeckung unverändert und bildet insbesondere keine Kanten oder Nähte aus.

Bei einer vorteilhaften Ausführung der Anlage kann vorgesehen sein, dass die Bedienvorrichtung in einen Bereich der Leuchteinheit angeordnet ist, der nicht für eine Emission von Prüflicht in Richtung des Prüfbereichs vorgesehen ist. Bei einem solchen Bereich kann es sich beispielsweise um die Umgebung einer ohnehin für die Leuchteinheit vorgesehenen Steuerplatine handeln. Vorzugsweise ist die transparente Abdeckung in diesem Bereich nicht transparent ausgebildet.

Alternativ oder zusätzlich kann der für die Bedienvorrichtung vorgesehene Bereich der Abdeckung der Leuchteinheit für die Prüfperson optisch gekennzeichnet sein. Dies kann beispielsweise durch eine Kennzeichnung mit einer anderen Farbgebung erfolgen.

Bei einer Weiterbildung der Erfindung ist vorgesehen, dass die Bedienvorrichtung ein Anzeigefeld aufweist, das hinter der transparenten Abdeckung angeordnet ist und das dazu eingerichtet ist, für eine Betätigung der Bedienvorrichtung relevante Informationen anzuzeigen. Es ist somit möglich, beispielsweise der Prüfperson vor einer Betätigung der Bedienvorrichtung das aktuelle Leuchtszenario anzuzeigen. Darüber hinaus kann beispielsweise angezeigt werden, was durch eine Betätigung der Bedienvorrichtung auslösbar ist.

Bei einer Ausführungsform der Erfindung ist vorgesehen, dass das Bedienelement so ausgelegt ist, dass mit einer Betätigung des Bedienelements einer oder mehrere der folgenden Vorgänge auslösbar sind:
Ein- und Ausschalten der Emission von Prüflicht in den Prüfbereich; oder/und Aktivieren einer bestimmten Beleuchtungssituation innerhalb des Prüfbereichs; oder/und
Steuern einer Lichtintensität der Leuchteinheit oder/und des Leuchtsystems; oder/und
Auslösen eines Qualitätsstopps Anlage; oder/und Auslösen einer Versorgungsanforderung.

Das Ein- und Ausschalten der Emission von Prüflicht kann eine einzelne Leuchteinheit oder den gesamten Prüfbereich umfassen. Unter dem Qualitätsstopp der Anlage wird vorliegend ein Unterbrechen der Förderung der zu prüfenden Gegenstände durch den Prüfbereich verstanden.

Eine Versorgungsanforderung kann beispielsweise erfolgen, wenn Verbrauchsmaterialien, die für das Prüfen der Gegenstände notwendig sind, zur Neige gehen oder ausgewechselt werden müssen.

Die Aufgabe wird außerdem durch ein Leuchtsystem für eine Anlage wie vorstehend beschrieben mit wenigstens einer ersten und einer zweiten Leuchteinheit gelöst, wobei die erste und die zweite Leuchteinheit baugleich sind. Dies hat den Vorteil, dass die Leuchteinheiten kostengünstig gefertigt werden können und innerhalb des Prüfbereichs eine entsprechende Vielzahl an Möglichkeiten besteht, eine Bedienvorrichtung vorzusehen. Gegebenenfalls kann die Bedienvorrrichtung auch in jeder der Leuchteinheiten angeordnet sein. Gleichzeitig muss für einen Austausch der Leuchteinheiten nur eine Art an Leuchteinheiten bevorratet werden.

Die Aufgabe wird außerdem durch ein Prüflichtmodul zum Aufbau einer Anlage wie vorstehend beschrieben gelöst. Das Prüflichtmodul weist wenigstens eine Leuchteinheit auf, wobei das Prüflichtmodul zudem wenigstens ein Anschlusselement für wenigstens eine Leitung für Betriebsmittel umfasst, so dass ein erstes Prüflichtmodul mit einem zweiten Prüflichtmodul betriebstechnisch und steuerungstechnisch verbunden werden kann. Auf diese Weise kann eine Prüfkammer aus mehreren Prüflichtmodulen effektiv aufgebaut und gegebenenfalls modifiziert werden.

### KURZE BESCHREIBUNG DER ZEICHNUNGEN

Nachfolgend werden Ausführungsbeispiele der Erfindung anhand der Zeichnungen näher erläutert. In diesem zeigen:
- Figur 1: eine perspektivische Ansicht einer Anlage zur optischen Überprüfung von Oberflächenbereichen von Gegenständen mit einer beweglichen Prüflichtvorrichtung;
- Figur 2: eine perspektivische Ansicht einer Anlage zur optischen Überprüfung von Oberflächenbereichen von Gegenständen, bei welcher Gegenstände mittels eines Fördersystems durch eine Prüfkammer gefördert werden; und
- Figuren 3a, 3b: eine Detailansicht der Figur 2 mit einer Detailvergrößerung sowie einer Schnittansicht.

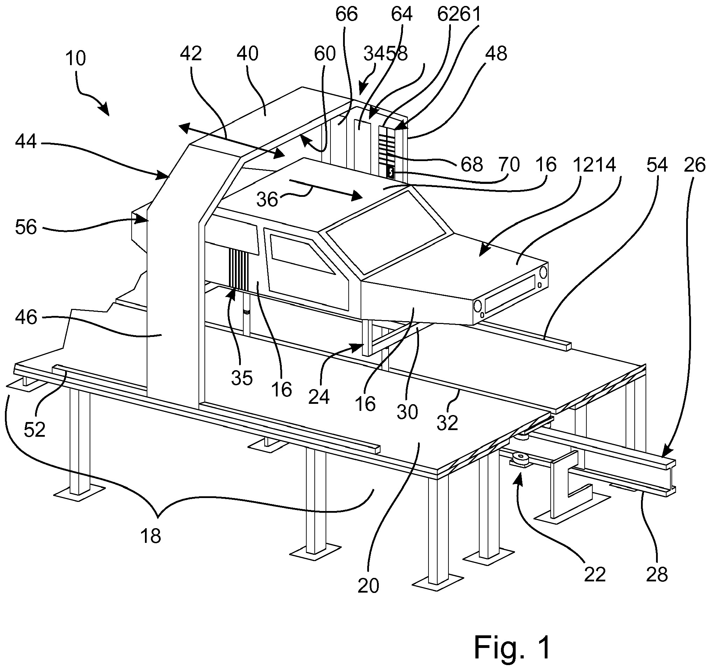

Figur 1 zeigt in einer perspektivischen Ansicht eine Anlage 10 zur optischen bzw. visuellen Überprüfung von Oberflächenbereichen von Gegenständen 12. Als Gegenstände 12 sind vorliegend beispielhaft Fahrzeugkarosserien 14 gezeigt. Der in Figur 1 gezeigte Gegenstand 12 weist zu überprüfende Oberflächenbereiche 16 auf, von denen einige mit einem entsprechenden Bezugszeichen versehen sind. Bei einem Prüfvorgang wird die gesamte Oberfläche des Gegenstands 12 geprüft, indem nacheinander einzelne Oberflächenbereiche 16 durch eine Prüfperson kontrolliert werden.

Dabei wird in dem in Figur 1 gezeigten Ausführungsbeispiel der Anlage 10 die Qualität der Lackierung von Fahrzeugkarosserien 14 visuell durch eine Prüfperson inspiziert. Hierfür ist in der Anlage 10 eine Prüfzone 18 mit einem von einer Prüfperson begehbaren Boden 20 vorgesehen. In die Prüfzone 18 werden die Fahrzeugkarosserien 14 mithilfe eines Transportsystems 22 gefördert.

Bei dem vorliegenden Ausführungsbeispiel umfasst das Transportsystem 22 eine Vielzahl von Transportwagen 24, auf denen die Fahrzeugkarosserien 14 transportiert werden. Die Transportwagen 24 werden auf einem Schienensystem 26 verfahren. In Figur 1 ist ein einziger dieser Transportwagen 24 gezeigt.

Das Schienensystem 26 umfasst eine Tragschiene 28, auf welcher der Transportwagen 24 verfährt und welche in bekannter Weise als I-Profil ausgebildet und am Boden verankert ist. Die bodengebundene Tragschiene 28 ist einspurig. Selbstverständlich kann alternativ auch ein mehrspuriges, insbesondere ein zweispuriges Schienensystem verwendet werden.

Der Transportwagen 24 umfasst eine Befestigungseinrichtung 30, an welcher eine Fahrzeugkarosserie 14 befestigt werden kann. Die Befestigungseinrichtung 30 nimmt eine Fahrzeugkarosserie 14 somit unmittelbar auf, ohne dass die Fahrzeugkarosserie 14 auf einem Werkstückträger, wie beispielsweise einem Skid, befestigt ist.

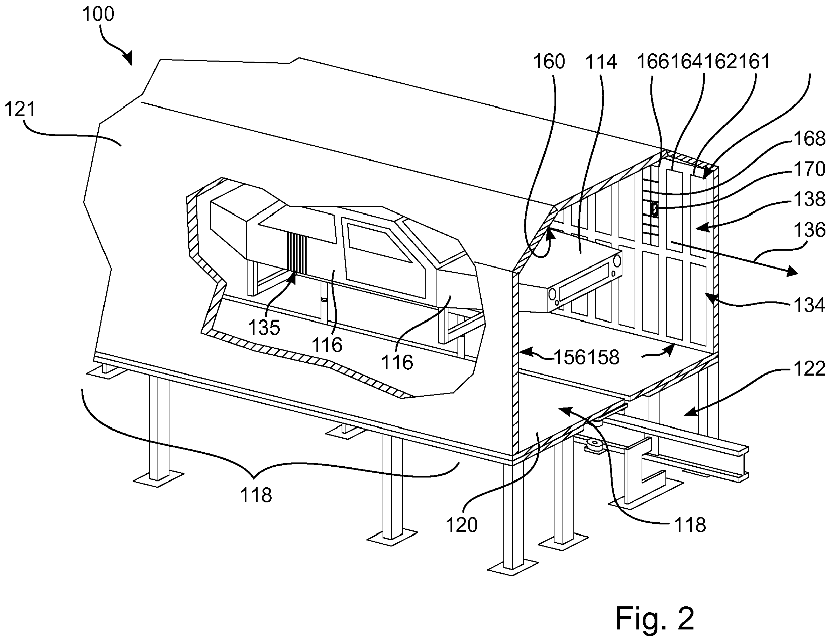

Alternativ kann auch ein Fördersystem vorgesehen sein, bei dem die Fahrzeugkarosserien auf Werkstückträgern befestigt sind und so gefördert werden. Dies wird näher unter Bezugnahme auf Figur 2 nachstehend erläutert. Darüber hinaus können andere gängige geeignete Fördersysteme verwendet werden, wie beispielsweise andere bodengebundene Schienensysteme, Hängebahnsysteme oder Plattenbandförderer.

Der begehbare Boden 20 der Prüfzone 18 weist einen Verbindungsdurchgang 32 auf, der eine Verbindung zwischen dem Fahrwerk des Transportwagens 24 und der Befestigungseinrichtung 30 ermöglicht und somit das Hindurchfördern der Fahrzeugkarosserien 14 durch die Prüfzone 18 ermöglicht.

Für die Begutachtung der Oberflächenbereiche 16 der Fahrzeugkarosserie 14 ist in der Prüfzone 18 eine Prüflichtvorrichtung 34 vorgesehen, mittels der die Fahrzeugkarosserien 14 mit einem Prüflicht bestrahlt werden können. Dabei kann ein Prüfmuster 35 erzeugt werden, das über einen zu überprüfenden Oberflächenbereich 16 bewegbar ist, solange sich die Fahrzeugkarosserie 14 in der Prüfzone 18 befindet. Grundsätzlich soll die Fahrzeugkarosserie 14 beim Prüfvorgang in der Prüfzone 18 stillstehen. Das Transportsystem 22 erlaubt es jedoch auch, dass die Fahrzeugkarosserie 14 beim Prüfvorgang in der Prüfzone 18 bewegt wird.

Das Prüfmuster 35 ist bei dem vorliegenden Ausführungsbeispiel als Streifenmuster ausgebildet, bei dem sich parallel zueinander angeordnet Hellstreifen mit Dunkelstreifen abwechseln. Die Hell- und Dunkelstreifen verlaufen bei den gezeigten Ausführungsbeispielen senkrecht zu einer Längsrichtung 36 der Fahrzeugkarosserien 14. Die Längsrichtung 36 der Fahrzeugkarosserien 14 entspricht gleichzeitig der Förderrichtung der Fahrzeugkarosserien 14.

Zum Erzeugen des Prüflichts und des zugehörigen Prüfmusters 35 umfasst die Prüflichtvorrichtung 34 ein Leuchtsystem 38, das von einer beweglichen Prüfeinrichtung 40 getragen und mitgeführt wird. Die Prüfeinrichtung 40 ist entlang einer vorgegebenen Bewegungsbahn verschiebbar. Beim vorliegenden Ausführungsbeispiel kann die Prüfeinrichtung 40 in und gegen die Längsrichtung 36 der Fahrzeugkarosserie 14 bewegt werden. Dies ist in Figur 1 durch einen Doppelpfeil 42 veranschaulicht.

Die bewegliche Prüfeinrichtung 40 kann mit Sicherheitselementen zum Personenschutz ausgestattet sein, wie beispielsweise mechanische Schaltleisten oder auch optische Einrichtungen wie Lichtschranken.

Die Prüfeinrichtung 40 ist bei dem in Figur 1 gezeigten Ausführungsbeispiel als Prüfportal 44 mit zwei Vertikalstützen 46, 48 und einem die Vertikalstützen 46, 48 verbindenden Portalbogen 50 ausgebildet. Die Vertikalstützen 46, 48 erstrecken sich grundsätzlich von unten nach oben, müssen aber keinen streng vertikalen Verlauf aufweisen.

Die Bewegung der Prüfeinrichtung 40 ist zwangsgeführt und weist hierfür beim vorliegenden Ausführungsbeispiel zwei parallele Schienen 52, 54 auf, die am Boden 20 der Prüfzone 18 befestigt sind und die Fahrzeugkarosserie 14 seitlich flankieren. Das Prüfportal 44 kann mithilfe eines Antriebs auf den Schienen 52, 54 bewegt werden. Alternativ kann der Antrieb auch abgekoppelt werden, so dass das Prüfportal 44 auch manuell verschoben werden kann. Auf diese Weise kann das Prüfportal 44 beispielsweise manuell von einem zu prüfenden Oberflächenbereich 16 zu einem nächsten zu prüfenden Oberflächenbereich 16 bewegt werden. Der einzelne Oberflächenbereich 16 kann dann motorisch mit vorgegebener Geschwindigkeit abgefahren werden.

Das Prüfportal 44 trägt an seinen Vertikalstützen 46, 48 zwei Seitenleuchteinrichtungen 56, 58 sowie an seinem Portalbogen 50 eine Deckenleuchteinrichtung 60. Die Seitenleuchteinrichtungen 56, 58 sind identisch aufgebaut, weshalb nachfolgend lediglich auf die Seitenleuchteinrichtung 58 eingegangen wird. Diese umfasst mehrere Leuchteinheiten 62, 64, 66, die als Leuchtpanels 61 ausgebildet sind und ihrerseits jeweils aus mehreren Leuchtelementen 68 aufgebaut sind. Bei dem vorliegenden Ausführungsbeispiel sind bei jeder Seitenleuchteinrichtung 56, 58 vier Leuchteinheiten 62, 64, 66 in einer 3x2-Anordnung vorhanden. Auch andere Anordnungen können ohne weiteres realisiert werden. Es kann auch nur ein einziges Leuchtpanel vorgesehen sein.

Bei dem in Figur 1 gezeigten Ausführungsbeispiel umfasst jede Leuchteinheit 62, 64, 66 mehrere Leuchtelemente 68, die ihrerseits jeweils beispielsweise vier einzelne Leuchtmittel - beispielsweise LEDs - aufweisen können. Bei den einzelnen Leuchtmitteln kann es sich beispielsweise um Weißlicht-Leuchtdioden, Gelblicht-Leuchtdioden oder/und RGB-Leuchtdioden handeln.

Die Weißlicht-Leuchtdioden können beispielsweise eine Lichttemperatur von 6500 K aufweisen und ein so genanntes Tageslichtweiß erzeugen. Die Gelblichtleuchtdioden können Temperatur von 2700 K aufweisen und so genanntes Warmweiß erzeugen. Wird das von den Weißlicht-Leuchtdioden und der Gelblicht-Leuchtdioden emittierte Licht zu gleichen Anteilen gemischt, ergibt sich eine Lichttemperatur von 4000 K, was auch als Kaltweiß oder Neutralweiß bezeichnet wird. Diese Lichttemperatur ist für das menschliche Auge wenig ermüdend.

Die Deckenleuchteinrichtung 60 ist entsprechend der Seitenleuchteinrichtung 58 aufgebaut und umfasst ebenfalls mehrere Leuchteinheiten.

Die Leuchtelemente 90 der einzelnen Leichteinheiten 62-66 sowohl der Seitenleuchteinrichtungen 56, 58 als auch der Deckenleuchteinrichtung 60 können gezielt und unabhängig von den übrigen Leuchtelementen oder/und Leuchtpanels aktiviert und deaktiviert werden. Beispielsweise können selektiv bestimmte Oberflächenbereiche 16 der Fahrzeugkarosserien 14 mit Prüflicht und einem Prüfmuster 35 bestrahlt werden.

Diejenigen Leuchtpanels 61, die nicht zur Erzeugung des Prüfmusters 35 benötigt werden, können zur allgemeinen Beleuchtung der Prüfzone 18 bzw. des Bereiches unter dem Prüfportal 44 genützt werden, sofern dies erforderlich ist. Hierzu kann die Lichtintensität selektiv bei einzelnen Leuchtelementen 68 auf das notwendige Maß verringert oder erhöht werden. Eine Grundbeleuchtung der Prüfzone 18 kann im Übrigen beispielsweise durch Leuchteinheiten im Boden 20 der Prüfzone 18 gewährgeleistet werden.

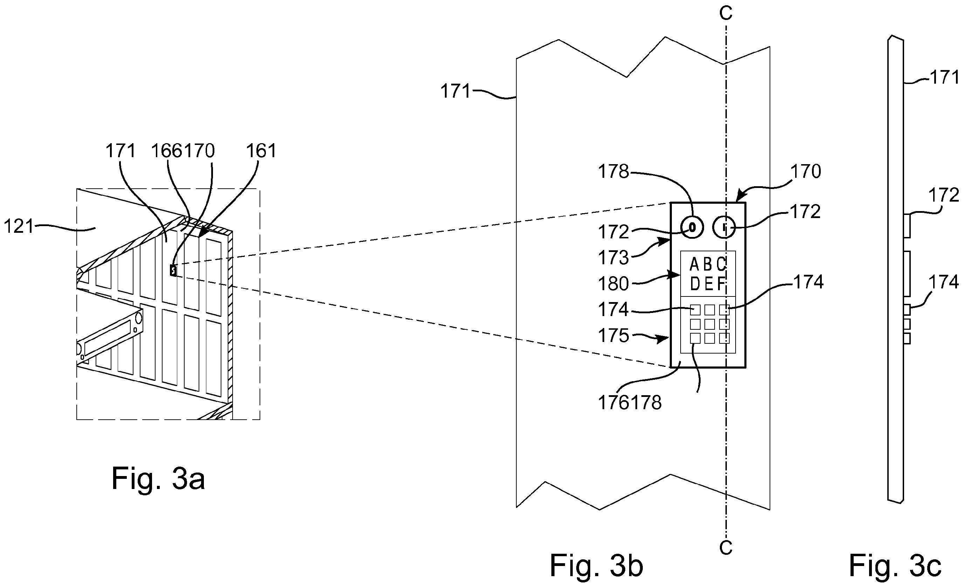

Wie bereits in der Darstellung der Figur 1 zu erkennen ist, weist die Leuchteinheit 62 neben den Leuchtelementen 68 eine Bedienvorrichtung 70 auf. Der Aufbau und die Funktion der Bedienvorrichtung 70 werden nachstehend unter Bezugnahme auf Figur 3 näher erläutert.

Figur 2 zeigt eine perspektivische Ansicht eine Anlage 100 zur optischen Überprüfung von Oberflächenbereichen von Gegenständen 12. Merkmale, die den Merkmalen der in Figur 1 gezeigten Ausführungsform gleich oder vergleichbar sind, sind bei der Ausführungsform der Figur 2 mit Bezugszeichen benannt, die um 100 erhöht wurden. Zur Vermeidung von Wiederholungen werden nur diejenigen Merkmale beschrieben, die relevante Unterschiede aufweisen.

Die Anlage 100 umfasst einen Prüfbereich 118 mit einem Gehäuse 121. Durch das Gehäuse 121 können Fahrzeugkarosserien 114 mithilfe eines Fördersystems 122 hindurchgefördert werden. Das Fördersystem 122 der in Figur 2 gezeigten Ausführungsform ist vergleichbar mit dem Transportsystem 22, das in Figur 1 gezeigt ist. Alternativ könnte beispielsweise das Fördersystem 122 auch als Rollenbahnförderer ausgelegt sein, auf dem sogenannte Skids transportiert werden können. In dem Prüfbereich der Anlage 100, der in dem Ausführungsbeispiel als Prüfkammer 118 ausgebildet ist und als Lichttunnel bezeichnet werden kann, ist eine Prüflichtvorrichtung 134 untergebracht, die weitgehend baugleich mit der Prüflichtvorrichtung 34 des Ausführungsbeispiels der Figur 1 ist.

Der wesentliche Unterschied besteht darin, dass die Prüflichtvorrichtung 134 stationär und nicht beweglich ausgebildet ist. Das Leuchtsystem 138 der Prüflichtvorrichtung umfasst ebenfalls zwei Seitenleuchteinrichtungen 156, 158 und eine Deckenleuchteinrichtung 160. Im Unterschied zur Ausführungsform der Figur 1 erstrecken sich die Seitenleuchteinrichtungen 156, 158 und die Deckenleuchteinrichtung 160 über den gesamten Prüfbereich und bilden so die Prüfkammer 118 bzw. den Lichttunnel.

Wie bereits vorstehend zum Ausführungsbeispiel der Figur 1 beschrieben weisen die als Leuchtpanels 161 ausgebildeten Leuchteinheiten 162-166 eine Vielzahl an Leuchtelementen 168 auf. Die Leuchteinheit 166 umfasst neben der Vielzahl an Leuchtelementen 168 auch eine Bedienvorrichtung 170. Dessen detaillierter Aufbau und Arbeitsweise wird nachfolgend unter Bezugnahme auf Figur 3 erläutert.

Figur 3a zeigt einen Ausschnitt der Figur 2, Figur 3b zeigt einen vergrößerten Ausschnitt aus der Figur 3a. Figur 3c zeigt eine Querschnittsansicht entlang der Linie c-c der Figur 3b aus Sicht des Prüfbereiches.

Die Bedienvorrichtung 170 weist eine Vielzahl an kapazitiven Sensoren 172, 174 auf. Die kapazitiven Sensoren 172, 174 sind auf der dem Prüftunnel 118 abgewandten Seite einer Schutzabdeckung 171, die beispielsweise aus Glas bestehen kann, angebracht. Jeder der kapazitiven Sensoren 172, 174 kann ein Signal erzeugen, das eine Bedienung der Bedienvorrichtung 170 anzeigt.

Die Schutzabdeckung 171 des Leuchtpanels 161 weist im Bereich der Bedienvorrichtung 170 eine Schwärzung 176 auf. Die Schwärzung kann innerhalb der Schutzabdeckung 171, auf der Rückseite der Schutzabdeckung 171 (also der Seite, welche dem Prüfbereich abgewandt ist und auf welcher die kapazitiven Sensoren 172, 174 angeordnet sind) oder auch auf der Außenseite der Schutzabdeckung 171 (also auf der Seite, welche dem Prüfbereich zugewandt ist) angebracht sein. Bedienfelder 178 sind farblich hervorgehoben. Auch die Bedienfelder 178 können in gleicher Weise wie die Schwärzung 176 außen, innen oder in der Schutzabdeckung 171 selbst vorgesehen sein.

Den kapazitiven Sensoren 172, 174 sind unterschiedliche Funktionen zugewiesen. Eine erste Gruppe 173 an Sensoren 172 bildet Ein-/Aus-Taster. Bei einer Betätigung der Sensoren 172 wird die entsprechend betätigte Leuchteinheit 166 ein- oder ausgeschaltet.

Eine zweite Gruppe 175 an Sensoren 174 bildet eine Tastatur, über welche beispielsweise numerische Codes für eine Identifizierung der bedienenden Prüfperson eingegeben werden kann. Die getätigten Eingaben über die zweite Gruppe 175 können beispielsweise auf einer Anzeige 180 dargestellt werden. Gleichzeitig oder alternativ können auf der Anzeige 180 Informationen angezeigt werden, die für die Bedienperson bei dem Prüfvorgang relevant sind, wie beispielsweise Daten über die zu prüfende Fahrzeugkarosserie 14 oder/und deren Lackierung, etc.

Auf diese Weise bildet die Bedienvorrichtung 170 eine dezentrale Steuer- und Bedieneinheit, welche in der Leuchteinheit 166 integriert ist. Die Bedienvorrichtung 170 kann für die eine Leuchteinheit 166 ausgelegt sein und nur zur Bedienung dieser einen Bedienvorrichtung vorgesehen sein. Alternativ können über die Bedienvorrichtung 170 mehrere Leuchteinheiten bedienbar sein.

Über die Bedienvorrichtung 170 können verschiedene Funktionen auslösbar sein. Beispielsweise können neben der bereits erwähnte Ein-/Aus-Funktion ein bestimmtes Lichtszenario, eine Lichtfarbe oder/und eine Lichtintensität eines einzelnen Moduls, mehrerer Module oder aller Module des Prüfbereichs steuerbar, einstellbar oder/und abrufbar sein.

Die mehreren Gruppen von Sensoren können auch durch ein gemeinsames Gehäuse zusammengefasst sein. In einer Variante ist die Bedienseite der Bedienvorrichtung hinsichtlich Aussehen und Funktion frei konfigurierbar.

Neben den lichtbezogenen Einstellungen können über die Bedienvorrichtung 170 andere Funktionen wie beispielsweise ein Qualitätstopp des Fördersystems 122 oder eine Anforderung von Verbrauchsmaterialien auslösbar bzw. ansteuerbar sein, um so für einen verbesserten Ablauf in der Lackieranlage bzw. dem Lichttunnel zu sorgen.

Das Signal, das über die Bedienvorrichtung 170 aufgenommen bzw. erzeugt wird, kann an eine Steuerplatine der Leuchteinheit weitergeleitet und dort verarbeitet werden. Danach kann eine entsprechende Aktion ausgelöst werden. So ist es möglich, eine dezentrale Steuerung der Leuchteinheit 166 vorzunehmen. Andererseits ist es möglich, eine Vielzahl von Leuchteinheiten mittels des dezentral aufgenommenen Signals über eine zentrale Verarbeitung der Signale beispielsweise über eine Steuerzentrale anzusteuern. Die Steuerzentrale erhält und sendet dann Signale, die wiederum Befehle oder Informationen sowie Fehlermeldungen sein können.

Auf diese Weise sind eine dezentrale Steuerung der einzelnen Leuchteinheit, eine partiell zentrale Steuerung mehrerer Leuchteinheiten als auch eine zentrale Steuerung aller Leuchteinheiten sowie eine Ansteuerung anderer Prozesse, beispielsweise von der einzelnen Bedienvorrichtung selbst oder von einer Steuerzentrale her, möglich.

Die Aktivierung eines solchen Signals an der Bedienvorrichtung kann beispielsweise durch eine bestimmte hinterlegte Mindestzeit abhängig gemacht werden, um das Auslösen falscher Signale zu verhindern. Andere Sicherheitsvorkehrungen sind möglich.

Weitere Funktionen können problemlos ohne Veränderung des Designs des Lichttunnels integriert werden.

## Patentansprüche

1. Anlage (100) zur optischen Überprüfung von Oberflächenbereichen (16) von Gegenständen (12), insbesondere von lackierten Fahrzeugkarosserien (14), mit
a) einer Prüflichtvorrichtung (134) zum Bestrahlen eines sich in einem Prüfbereich (118) der Anlage befindlichen Gegenstandes (14) mit einem Prüflicht und/oder zum Erzeugen eines Prüfmusters (135) auf dem Oberflächenbereich (16), wobei
b) die Prüflichtvorrichtung (134) ein Leuchtsystem (138) mit mehreren Leuchteinheiten (162, 164, 166) zur Emission von Prüflicht in den Prüfbereich (118) aufweist, wobei die Leuchteinheiten (162, 164, 166) eine transparente Abdeckung (171) zum Prüfbereich (118) hin aufweisen,
**dadurch gekennzeichnet, dass**
c) eine Bedienvorrichtung (170) vorgesehen ist, welche vom Prüfbereich (118) aus gesehen hinter der transparenten Abdeckung (171) angeordnet ist und die dazu eingerichtet ist,
d) dass durch Berühren zumindest eines Abschnitts (178) der Abdeckung (171) oder/und durch Annähern an einen solchen Abschnitt (178) eine Betätigung der Bedienvorrichtung (170) erfolgen kann.

2. Anlage nach Anspruch 1, wobei die Bedienvorrichtung (170) einen kapazitiven Sensor (172, 174) umfasst.

3. Anlage nach einem der vorhergehenden Ansprüche, wobei die Bedienvorrichtung (170) in einem Bereich der Leuchteinheit (166) angeordnet ist, der nicht für die Emission vorgesehen ist.

4. Anlage nach einem der vorhergehenden Ansprüche, wobei die Bedienvorrichtung (170) ein Anzeigefeld (180) aufweist, das hinter der transparenten Abdeckung (171) angeordnet ist und das dazu eingerichtet ist, für eine Betätigung der Bedienvorrichtung (170) relevante Informationen anzuzeigen.

5. Anlage nach einem der vorhergehenden Ansprüche, wobei das Bedienelement (170) so ausgelegt ist, dass mit einer Betätigung des Bedienelements (170)
a) die Emission von Prüflicht in den Prüfbereich (118) ein- und ausschaltbar ist, oder/und
b) eine bestimmte Beleuchtungssituation innerhalb des Prüfbereichs (118) aktivierbar ist, oder/und
c) eine Lichtintensität der Leuchteinheit (166) oder/und des Leuchtsystems (138) steuerbar ist, oder/und
d) ein Qualitätsstopp der Anlage (100) auslösbar ist, oder/und
e) eine Versorgungsanforderung auslösbar ist.

6. Leuchtsystem (138) für eine Anlage (100) nach einem der vorhergehenden Ansprüche mit wenigstens einer ersten Leuchteinheit (162) und einer zweiten Leuchteinheit (164), wobei die Leuchteinheiten baugleich sind.

7. Prüflichtmodul (134) zum Aufbau einer Anlage (100) nach einem der Ansprüche 1 bis 5.
